(19) **Europäisches Patentamt / European Patent Office / Office européen des brevets**

(11) **EP 2 365 661 A1**

(12) **EUROPEAN PATENT APPLICATION**

(43) Date of publication:
**14.09.2011 Bulletin 2011/37**

(51) Int Cl.:
*H04L 12/24* (2006.01)   *H04B 3/46* (2006.01)
*H04M 3/34* (2006.01)

(21) Application number: **10305232.0**

(22) Date of filing: **08.03.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(71) Applicant: **Alcatel Lucent**
**75008 Paris (FR)**

(72) Inventors:
• **Pizurica, Veselin**
 **9052, Gent (BE)**
• **Wahibi, Issam**
 **1070, Anderlecht (BE)**

(74) Representative: **D'Halleweyn, Nele Veerle Trees Gertrudis et al**
**Arnold & Siedsma**
**Sweelinckplein 1**
**2517 GK Den Haag (NL)**

(54) **Method and devices for network topology identification**

(57)    A method and associated devices are disclosed for determining topology information of a network, the network comprising a set of transmission lines carrying associated transmission signals, comprising
- determining an estimate of crosstalk between every pair of lines of the set of transmission lines,

- deriving distance information for at least one pair of transmission lines based on the estimates of crosstalk; and associated devices.
    A method which takes into account a novel concept of confusion for determining the distance information has also been provided.

EP 2 365 661 A1

Loop i

Loop j

Distance = $1/C_{ij}$

FIG. 5

**Description**

Technical field of the invention

The present invention relates to the field of methods and devices for network topology identification. In certain aspects it relates to the field of DSL networks.

Background of the invention

The majority of access network operators have a poor quality of the network inventory data that describes the architecture and location of the key network infrastructure assets.
A lack of such information burdens the solving of occuring network failures and can be an obstacle for network performance improvement. Such failures or low performance can for instance be due to crosstalk effects between different transmission signal carrying lines which are located close to eachother.
It is for instance known that the service quality of DSL users associated with a predetermined copper line, may seriously be impacted by transmission signals on physically neighbouring lines.

Summary of the invention

According to a first aspect of the present invention a method is disclosed for determining topology information of a network, the network comprising a set of transmission lines carrying associated transmission signals, comprising determining an estimate of crosstalk between every pair of lines of the set of transmission lines and deriving distance information for at least one pair of transmission lines based on the estimates of crosstalk.
The network can for instance be a DSL access network.
A transmission line can for instance, but not only, be a twisted pair line or a PLC (Power Line Communications) line. The transmission line can be any transmission line which can generate an electromagnetic field that extends substantially outside said line and can therefore interfere with neighboring lines.
According to preferred embodiments of the present invention a method is disclosed, wherein the respective estimate of crosstalk is based on measurement of a set of parameter values for each line during transmission on the lines.
According to preferred embodiments of the present invention a method is disclosed, wherein the set of parameter values comprises for each line at least the signal-to-noise ratio, the transmitted power and the direct transfer function of the line.
According to preferred embodiments of the present invention a method is disclosed, wherein subsets of the set of transmission lines are comprised in a set of different respective bundles, the bundles at least locally grouping the subset of transmission lines physically, comprising deriving which lines are located relatively close to each other based on the estimates of crosstalk, hereby determining the number of bundles present in the set of bundles and determining which subsets of lines belong to each of the bundles respectively.
In preferred embodiments of the present invention a method is disclosed, which further comprises rescaling the estimates of crosstalk by taking into account line lengths and attenuation characteristics of the lines, and wherein transmission lines are identified as being relatively close to each other by taking into consideration whether the rescaled estimate of crosstalk is above a predetermined threshold.
In preferred embodiments of the present invention a method is disclosed, which further comprises rescaling the estimates of crosstalk by taking into account the direct transfer functions of the lines, and wherein transmission lines are identified as being relatively close to each other by taking into consideration whether the rescaled estimate of crosstalk is above a predetermined threshold.
According to preferred embodiments of the present invention a method is disclosed, wherein the predetermined threshold is not smaller than a typical value for inter-bundle crosstalk.
According to preferred embodiments of the present invention a method is disclosed, wherein deriving which lines are located relatively close to each other comprises taking into account an estimate of probability that the respective lines are belonging to respective bundles.
According to preferred embodiments of the present invention a method is disclosed, further comprising associating at least one transmission signal to a transmission line different from the originally associated transmission line, based on the distance information.
According to preferred embodiments of the present invention a method is disclosed, comprising precompensating transmitted signals in downstream in a communication network over the lines at transmission side, taking into account the distance information between at least two, (preferably all) lines and the estimated crosstalk information.
According to preferred embodiments of the present invention a method is disclosed, comprising cancelling effects of crosstalk on signals transmitted upstream in a communication network at reception side, taking into account the estimates of distance between at least two lines (preferably all) and the estimated crosstalk information.

According to preferred embodiments of the present invention a method is disclosed, wherein all transmission lines are present in a single bundle, comprising determining the relative physical positions of the lines within the bundle, based on the distance information derived for each pair of transmission lines within that single bundle.

According to preferred embodiments of the present invention a method is disclosed, comprising precompensating signals transmitted downstream in a communication network over the lines, taking into account the relative physical positions of the lines.

According to preferred embodiments of the present invention a method is disclosed, comprising cancelling effects of crosstalk on signals transmitted upstream in a communication network, taking into account relative physical positions of the lines.

According to a second aspect of the present invention, a method is disclosed for determining the crosstalk between different transmission lines, comprising

    a. predetermining a set of transmission lines;
    b. determining for each of the transmission lines a set of parameter values, during transmission over the lines;
    c. determining an estimate of crosstalk between every pair of lines of the predetermined set of transmission lines, based on the set of parameter values, wherein the set of parameter values comprises at least the signal-to-noise ratio, the transmitted power and the direct transfer function of the line.

According to preferred embodiments of the present invention a method is disclosed, comprising precompensating signals transmitted downstream in a communication network over the lines, taking into account the estimates of crosstalk.

According to preferred embodiments of the present invention a method is disclosed, comprising cancelling effects of crosstalk on signals transmitted upstream in a communication network, taking into account the estimate of crosstalk.

According to a third aspect of the present invention a device is disclosed for determining topology information for a network, the network comprising a set of transmission lines carrying associated transmission signals, comprising

-    a crosstalk determining means for determining an estimate of crosstalk between every pair of lines of the set of transmission lines;
-    a distance derivation means for deriving distance information for at least one pair of transmission lines based on the estimates of crosstalk.

According to preferred embodiments of the present invention the device further comprises a rescaling means for rescaling the estimates of crosstalk by taking into account line lengths and attenuation characteristics of the lines, and adapted for identifying transmission lines as being relatively close to each other by taking into consideration whether the rescaled estimate of crosstalk is above a predetermined threshold.

According to preferred embodiments of the present invention the device is adapted for taking into account an estimate of probability that the respective lines are belonging to respective bundles, when deriving which lines are located relatively close to each other. The estimate of probability can be an estimate of confusion as described below.

According to preferred embodiments of the present invention the device comprises physical positions determining means for determining the relative physical positions of the lines within the bundle, based on the distance information derived for each pair of transmission lines, when all of the lines are within the same bundle.

According to preferred embodiments of the present invention the device comprises a precompensating means for precompensating signals transmitted downstream in a communication network over the lines, taking into account the relative physical positions of the lines determined by the physical positions determining means.

According to preferred embodiments of the present invention the device comprises a crosstalk effect cancelling means for cancelling effects of crosstalk on signals transmitted upstream in a communication network, taking into account the relative physical positions of the lines determined by the physical positions determining means.

According to a fourth aspect of the present invention, a device is disclosed for determining the crosstalk between different transmission lines carrying associated transmission signals, comprising:

    a. a parameter value determination means for determining a set of parameter values for each of the transmission lines, during transmission over the lines;
    b. a crosstalk estimate determining means for determining an estimate of crosstalk between every pair of lines of the transmission lines, based on the set of parameter values determined by the parameter value determination means; wherein the set of parameter values comprises at least the signal-to-noise ratio, the transmitted power and the direct transfer function of the line.

EP 2 365 661 A1

Further aspects of the present invention are described by the dependent claims. The features from the dependent claims, features of any of the independent claims and any features of other dependent claims may be combined as considered appropriate to the person of ordinary skill, and not only in the particular combinations as defined by the claims. Features which are described for method aspects are supposed to be also applicable to the device aspects.

Brief description of the drawings

The accompanying drawings are used to illustrate embodiments of the present invention.

Fig. 1 illustrates the crosstalk effect in a typical access network.
Fig 2 illustrates the state of the art Greville algorithm which can be used in embodiments according to the present invention.
Fig. 3 and Fig 4 illustrate embodiments of the present invention wherein for the transmission lines under consideration, a determination is made as to how many different bundles are present and to which respective bundles the respective transmission lines belong.
Fig. 5 and Fig. 6 illustrate embodiments of to present invention wherein, for transmission lines which all belong to the same bundle; a determination is made of the relative physical location of the different lines within that bundle.

Reference signs are chosen such that they are the same for similar or equal elements or features in different figures or drawings.

Description of illustrative embodiments

The above and other advantageous features and objects of the invention will become more apparent and the invention will be better understood from the following detailed description when read in conjunction with the respective drawings.
The description of aspects of the present invention is performed by means of particular embodiments and with reference to certain drawings but the invention is not limited thereto. Depicted figures are only schematic and should not be considered as limiting.
In access networks, as for instance in DSL access networks, typically a large number of data transmission lines (also called loops) are located close to each other. These lines are typically bundled in one or more so called "bundles". When considering two different lines, they may thus be joined into the same bundle, or may belong to different bundles.
According to an aspect of the present invention, a method is disclosed which identifies the topology of the network, which comprises a predetermined number of lines, based on estimates of crosstalk information. It has been demonstrated that information relating to the distance between different of those lines can be derived based on these estimates of crosstalk information. The method is preferably based on the estimation of the mean of the crosstalk channel gain in the frequency domain. The crosstalk information can be derived by for instance measuring a set of parameters for the different lines during transmission on the lines. According to advantageous embodiments, these parameters comprise Signal-to-Noise Ratio (SNR), the transmitted power and the direct transfer function of the line, the latter also called Hlog function.
This aspect of the present invention can alternatively also be based on crosstalk information which is determined by other state of the art methods.
According to a first subaspect, the topology of the network is determined by determining the number of bundles represented by a predetermined number of lines, and by determining which lines belong to which of the respective bundles.
According to a second subaspect of the present invention, the geometrical distribution (relative physical positioning) of the loops which share the same bundle can be determined. It has been shown that the information provided by the normalisation (rescaling) of the estimation of crosstalk channel gain (also referred to as crosstalk) is representative for (or equivalent to) the inverse of the distance between the lines. Methods have been provided for solving such a computational geometry problem. Other methods as for instance methods using a Voronoi diagram or genetic algorithm can also be utilised. This geometrical distribution can advantageously also be visualized in a graphical user interface of the network management tool in order to provide the network operator a new tool for identifying and solving network problems.
According to a second aspect of the present invention a novel method is provided for determining crosstalk information as such.
The third and fourth aspect of the present invention relate to devices which are adapted for implementing the methods according to the first and the second aspects.
Below, the second aspect of the present invention will first be described, as it results in crosstalk information which can be used according to the first aspect.

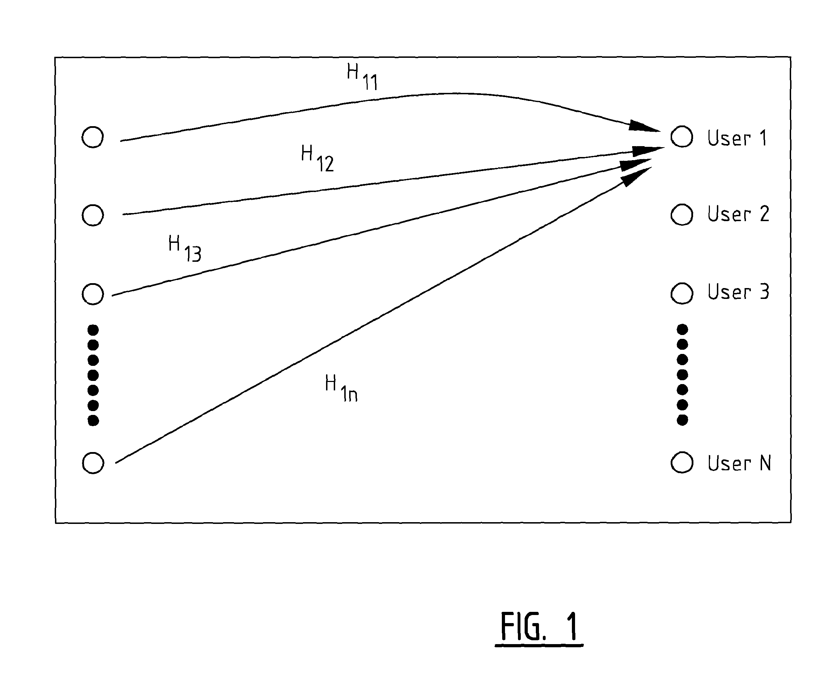

Fig. 1 illustrates the crosstalk effect in a typical access network. Each of the users user1, user2, ... userN is associated to a predetermined line L1, L2, ... LN. The direct transfer function H11 is associated with line 1, and corresponds to the attenuation of L1. The crosstalk induced in L1 by other lines L2, L3, ..., LN are represented by the crosstalk transfer functions H12, H13, ..., H1N.

Algorithm Inputs for determining crosstalk information:

The inputs of the algorithm are:

- The total transmit power for all users: $P_1$, $P_2$,..., $P_N$ (in dBm) ;
- The frequency vector of signal-to-noise ratio (SNR) for user $i$;
- The frequency vector of direct transfer function (Hlog)

for user $i$ : $|H_{ii}|^2$.

Algorithm description

The DMT (Discrete Multi Tone) modulation allows to express the received signal for user $i$ indepenendly for each tone k as follows:

$$y_i^k = H_{ii}^k x_i^k + \sum_{\substack{n=1 \\ n \neq i}}^{N} H_{in}^k x_n^k + n_i^k$$

(Eq. 1)

with $y_i^k$ is the received signal, $x_i^k$ is the transmitted signal and $n_i^k$ is additive white Gaussian noise. The matrix $H^k$ is the frequency response of the MIMO channel of tone k. The diagonal elements of $H^k$ are the attenuation coefficients which are also called the Hlog functions of the lines and the off-diagonal elements $H_{in}^k$ are the FEXT coefficients (Far-End Crosstalk) which represent the coupling channel between transmitter (TX) $i$ and receiver (RX) $n$ on tone $k$ (see Fig. 1).

The signal-to-noise ratio for user $i$ at *tone k* is given by :

$$SNR_i^k = \frac{p_i^k \left| H_{ii}^k \right|^2}{\sum_{\substack{n=1 \\ n \neq i}}^{N} p_n^k \left| H_{in}^k \right|^2 + \sigma_n^2}$$

(Eq. 2)

With $p_i^k$ is the transmitted power spectral density for user $i$ at tone k and $\sigma_n^2$ is the Additive white gaussian noise variance.

Then :

$$\sum_{\substack{n=1 \\ n \neq i}}^{N} p_n^k \left| H_{in}^k \right|^2 = \frac{p_i^k \left| H_{ii}^k \right|^2}{SNR_i^k} - \sigma_n^2$$

(Eq. 3)

Let's $P_i$ the total transmitted power for user $i$. Then,

$$P_i = f_s \sum_{k=1}^{K} p_i^k \qquad \text{(Eq. 4)}$$

With $f_s$ is the tone spacing and K is the number of loaded tones. The following approximation can be done:

$$p_i^k = \frac{P_i}{K.f_s} = p_i \qquad \text{(Eq. 5)}$$

Then, the equation (Eq. 3) becomes

$$\sum_{\substack{n=1 \\ n \neq i}}^{N} p_n \left| H_{in}^k \right|^2 = \frac{p_i \left| H_{ii}^k \right|^2}{SNR_i^k} - \sigma_n^2 \qquad \text{(Eq. 6)}$$

So,

$$\frac{\sum_{k=1}^{K} \sum_{\substack{n=1 \\ n \neq i}}^{N} p_n \left| H_{in}^k \right|^2}{K} = \frac{\sum_{k=1}^{K} \frac{p_i \left| H_{ii}^k \right|^2}{SNR_i^k} - \sigma_n^2}{K} \qquad \text{(Eq.7)}$$

$$\sum_{\substack{n=1 \\ n \neq i}}^{N} p_n \frac{\sum_{k=1}^{K} \left|H_{in}^{k}\right|^{2}}{K} = p_i \frac{\sum_{k=1}^{K} \frac{\left|H_{ii}^{k}\right|^{2}}{SNR_{i}^{k}}}{K} - \sigma_n^2 \quad \text{(Eq. 8)}$$

N is the number of lines and **K** is the number of loaded tones. $\dfrac{\sum_{k=1}^{K}\left|H_{in}^{k}\right|^{2}}{K} = \left|H_{in}\right|^{2}_{mean}$ is the mean

of crosstalk channel gain in frequency domain. $\dfrac{\sum_{k=1}^{K}\dfrac{\left|H_{ii}^{k}\right|^{2}}{SNR_{i}^{k}}}{K}$ is noted $\left[\dfrac{\left|H_{ii}\right|^{2}}{SNR_{i}}\right]_{mean}$ . The equation (Eq. 8)

becomes:

$$\sum_{\substack{n=1 \\ n \neq i}}^{N} p_n \left|H_{in}\right|^{2}_{mean} = p_i \left[\frac{\left|H_{ii}\right|^{2}}{SNR_{i}}\right]_{mean} - \sigma_n^2 \quad \text{(Eq. 9)}$$

The (Eq. 4) can be considered as a linear system for a given user **i** :

$$\mathbf{P}_i \mathbf{h_i} = z_\mathbf{i}$$

$$\text{(Eq. 10)}$$

With $\mathbf{P}_i$ is a **(T × (N -1))** matrix, where **T** represents the time index. The input data are collected preferably on regular time intervals (for instance one time each day), and they are preferably stored in a memory into the vectorial form:

$$\mathbf{P}_i = \begin{bmatrix} P_1(1) & \cdots & P_{i-1}(1) & P_{i+1}(1) & \cdots & P_N(1) \\ P_1(2) & \cdots & P_{i-1}(2) & P_{i+1}(2) & \cdots & P_N(2) \\ \vdots & \vdots & \vdots & \vdots & \vdots & \vdots \\ P_1(T) & \cdots & P_{i-1}(T) & P_{i+1}(T) & \cdots & P_N(T) \end{bmatrix} \quad \text{(Eq. 11)}$$

The vector $\mathbf{h_i}$ is a $((N\text{-}1)\times 1)$ vector defined as:

$$\mathbf{h}_i = \begin{bmatrix} \left|H_{i1}\right|^2_{mean} \\ \vdots \\ \left|H_{i,i-1}\right|^2_{mean} \\ \left|H_{i,i+1}\right|^2_{mean} \\ \vdots \\ \left|H_{iN}\right|^2_{mean} \end{bmatrix} \qquad (\text{Eq. } 12)$$

And the observation vector $Z_i$ is a $((N\text{-}1)\times 1)$ vector defined as:

$$\mathbf{z}_i = \begin{bmatrix} \dfrac{P_1\left|H_{11}\right|^2}{SNR_1} - \sigma_n^2 \\ \vdots \\ \dfrac{P_{i-1}\left|H_{i-1,i-1}\right|^2}{SNR_{i-1}} - \sigma_n^2 \\ \dfrac{P_{i+1}\left|H_{i+1,i+1}\right|^2}{SNR_{i+1}} - \sigma_n^2 \\ \vdots \\ \dfrac{P_N\left|H_{NN}\right|^2}{SNR_N} - \sigma_n^2 \end{bmatrix}$$

$$(\text{Eq. } 13)$$

In order to eliminate the variance of the white Gaussian noise $\sigma_n^2$, one can subtract two rows in the equation (Eq. 10)

The linear system (Eq. 5) can be solved using the pseudo-inverse of Moore Penrose $\mathbf{P}_i^+$ of $\mathbf{P}_i$ which minimizes the quantity $\|\mathbf{P}_i\mathbf{h_i} - z_i\|_2$. By definition, the pseudo-inverse of Moore Penrose $\mathbf{P}_i^+$ must verify the following four conditions:

1)

$$\mathbf{P}_i \mathbf{P}_i^+ \mathbf{P}_i = \mathbf{P}_i$$

2)

$$\mathbf{P}_i^+ \mathbf{P}_i \mathbf{P}_i^+ = \mathbf{P}_i^+$$

3)

$$\left(\mathbf{P}_i^+ \mathbf{P}_i\right)^T = \mathbf{P}_i^+ \mathbf{P}_i$$

4)

$$\left(\mathbf{P}_i \mathbf{P}_i^+\right)^T = \mathbf{P}_i \mathbf{P}_i^+$$

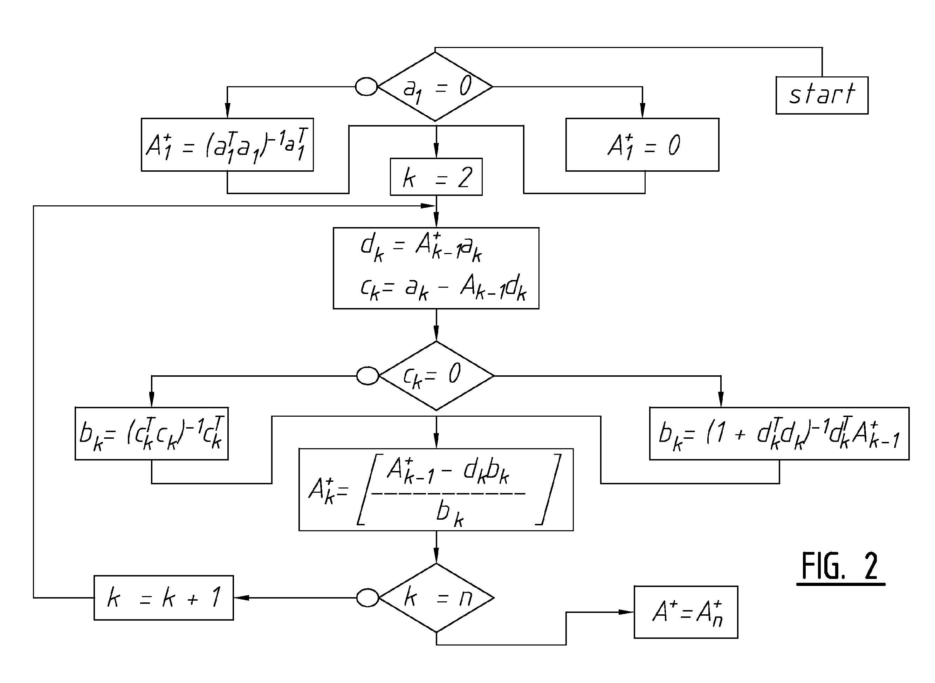

In order to compute the matrix $\mathbf{P}_i^+$ row by row, the state of the art Greville algorithm is used (summarized in Fig.2). Then, the estimated FEXT channel can be express by:

$$\hat{\mathbf{h}}_\mathbf{i} = \mathbf{P}_i^+ z_\mathbf{i}$$

(Eq. 10)

The advantage of Greville algorithm is that it doesn't require any matrix inversion. Other algorithms may be applicable as will be recognised by the skilled person.

Another method to compute the pseudo-inverse is $\mathbf{P}_i^+ = \left(\mathbf{P}_i^T \mathbf{P}_i\right)^{-1} \mathbf{P}_i^T$ , with $\mathbf{P}_i^T$ is the transpose matrix of $\mathbf{P}_i$

It should be noted that the number of collection data $\bar{T}$ is preferably higher than the number of users $N$ for a correct estimation, i.e. $T > N$ .

Bundle topology identification

The principle of bundle topology identification is based on the rescales, for instance normalized estimated crosstalk. The normalised estimated crosstalk allows the determination of the distance between two different lines, and thus between all lines. The estimate of distance between two lines, $L_i$ and $L_j$, corresponds to $1/C_{ij}$, where $C_{ij}$ is the normalised crosstalk for channels i and j. Note that, when the estimated crosstalk is normalised, $C_{ij}$ is approximately equal to $C_{ji}$. The normalisation of the crosstalk typically comprises dividing the different averaged crosstalk values corresponding to the crosstalk effect on a particular line A, by the averaged direct transfer function of that line A. The normalisation can be seen as a rescaling of the crosstalk in order to make it independent of line length and line attenuation.

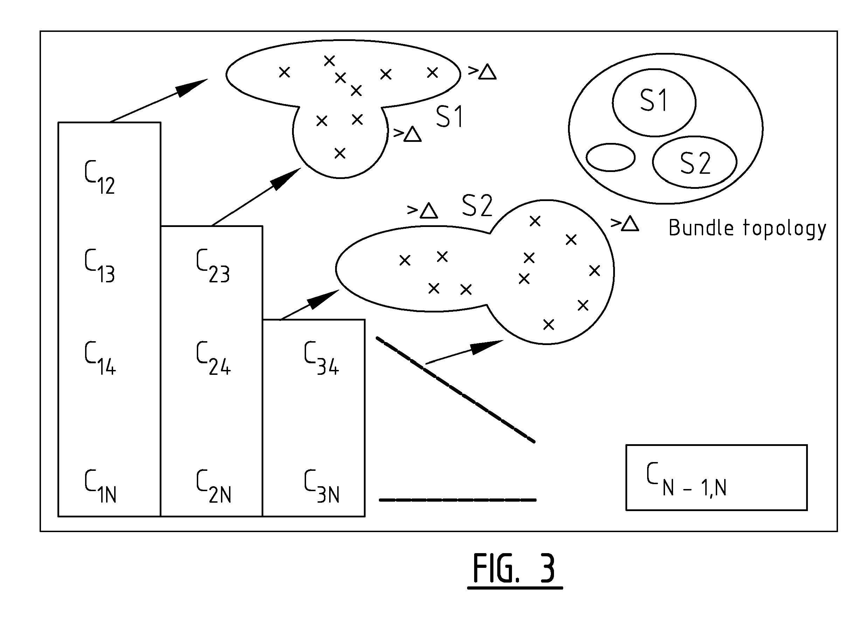

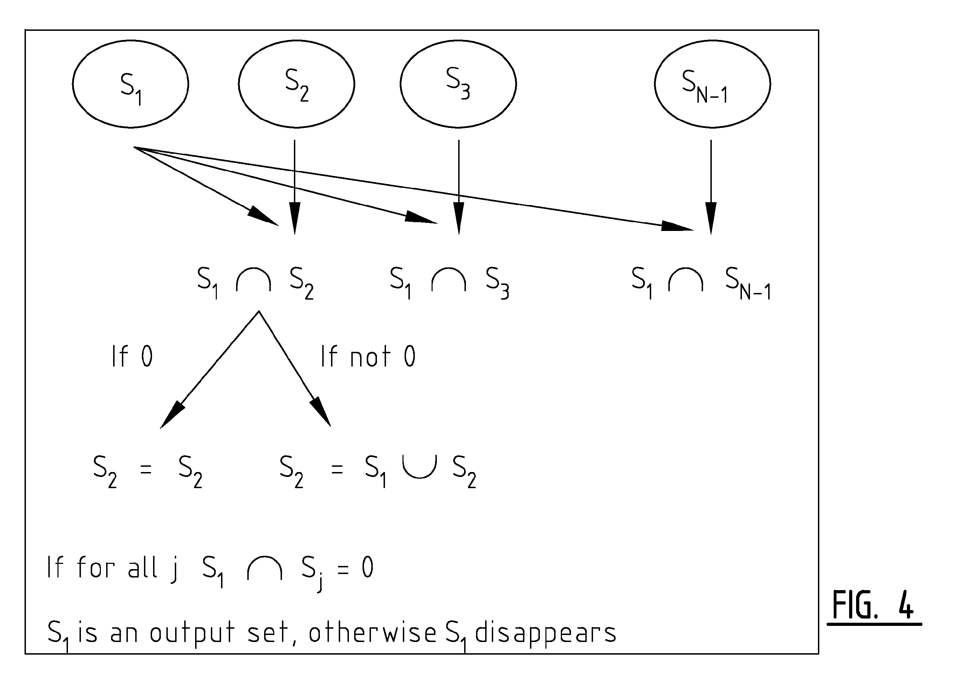

If two loops share the same bundle, then the crosstalk gain between them is significant. Otherwise, the crosstalk between them is negligible. One can thus exploit the crosstalk information in order to determine the loops which are grouped in the same bundle. This is illustrated in Fig.3 and Fig. 4.

The normalized crosstalk channel can be defined as:

$$C_{ij} = \frac{|h_{ij}|}{|h_{ii}|}$$

A threshold $\Delta$ (inter-bundle crosstalk coefficient) for loops grouping decision can be defined as follows:

If $C_{ij} > \Delta$ then the loops *i* and *j* are in the same bundle.

One can start by the first column of Fig. 3. One can identify which loops are in the same bundle with the loop 1.

So, if $C_{1j} > \Delta$, then the loop *j* is in the same bundle with the loop 1. The set of these loops and loop 1 are grouped in the set $S_1$.

This procedure can be repeated for all the columns in figure 3, resulting in N-1 sets: $S_1, S_2, \cdots S_{N-1}$.

The goal is to group the loops which are in the same bundle. For this reason, the procedure is decomposed in N-1 iterations.

Afterwards a similar, second iteration can be performed, wherein the sets $S_1, S_2, \cdots S_{N-1}$ are compared. This procedure is illustrated in Fig. 4. When it is determined that there are no common lines between two of those sets, the sets are left independent. If a common line is present in some of the sets, the sets can be joined into a single new set. Iterating this process results in a clustering process which ends at a number of sets which are disjunct, corresponding to the number of bundles. The lines of the corresponding disjunct sets are then assumed to belong to the same bundles.

Also other algorithms can be applied by the skilled person in order to arrive at a similar clustering process, based on the normalized crosstalk information.

Physical location of the lines in the same bundle

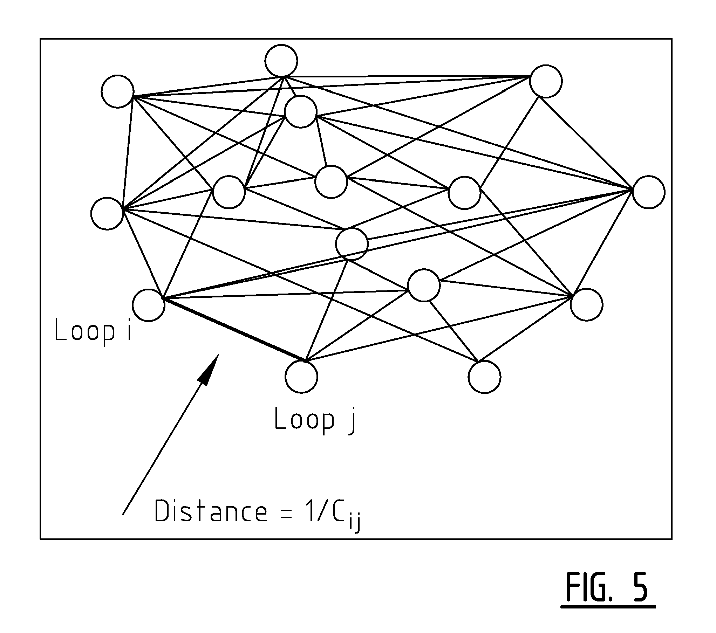

According to the second subaspect of the present invention, the geometrical distribution of lines in a bundle can be determined. Hereby it is assumed that the position of the line in the bundle can be determined based on the normalized/rescaled crosstalk estimates, in the same way as described for the first subaspect. The closer two lines are, the more the crosstalk between them is. This problem can be viewed as an optimization problem. Its solution may require advanced, but state of the art mathematical methods. Such methods can make use of for instance a Voronoi diagram or a genetic algorithm. Once the geometrical distribution is determined this can be visualized in a graphical user interface of a network management tool. (see Fig. 5)

Concept of confusion

The distance information used, and according to certain embodiments the corresponding reference distance matrix, may contain contradictory information. For example, if the distance matrix is not symmetric (e.g. $d_{ij}$ is different from $d_{ji}$), or for example in cases where for instance line A is very close to line B and line B is very close to line C, but line C is very far from line A.

The concept of the confusion has further been developed, and is a measure of how good the estimate of the geographical distribution of the lines in the bundle is. This concept can be used for comparing different methods for determining the relative physical positions of the lines in the bundle.

Below a confusion matrix is therefore explained.

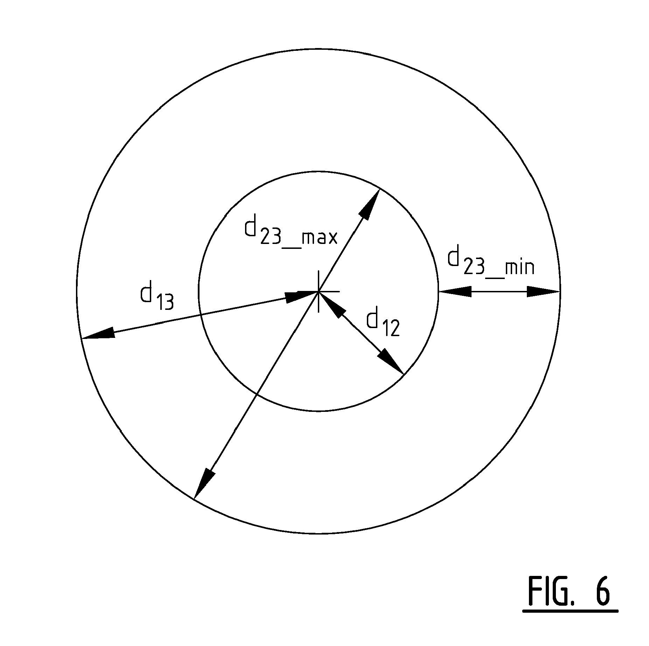

Referring to Fig. 6, the following applies to the upper and lower bounds of the distance $d_{23}$, knowing the distances $d_{12}$ and $d_{13}$.

$$d_{23}^{\min} = |d_{13} - d_{12}| \le d_{23} \le d_{13} + d_{12} = d_{23}^{\max}$$

The previous equation can be generalized:

$$d_{ij}^{\min} = \left| d_{ik} - d_{kj} \right| \le d_{ij} \le d_{ik} + d_{kj} = d_{ij}^{\max} \qquad \forall k, i, j$$

The error matrix is defined as:

$$[C]_{i,j} = \sum_{k=1}^{N} \left( a_{ij}^{k} + b_{ij}^{k} \right)$$

with:

$$a_{ij}^{k} = \begin{cases} 0 & if \left( d_{ik} + d_{kj} \ge d_{ij} \right) \\ d_{ij} - \left( d_{ik} + d_{kj} \right) & else \end{cases}$$

and

$$b_{ij}^{k} = \begin{cases} 0 & if \left( \left| d_{ik} - d_{kj} \right| \le d_{ij} \right) \\ \left| d_{ik} - d_{kj} \right| - d_{ij} & else \end{cases}$$

The level of the error matrix can be computed by the following sum:

$$L = \sum_{i} \sum_{j} C_{ij}$$

It is clear that if there are no contradictory distances in the distance matrix, the level of error is 0.

In the description of certain embodiments according to the present invention, various features are sometimes grouped together in a single embodiment, figure, or description thereof for the purpose of aiding in the understanding of one or more of the various inventive aspects. This is not to be interpreted as if all features of the group are necessarily present to solve a particular problem. Inventive aspects may lie in less than all features of such a group of features present in the description of a particular embodiment.

It should be noted that although the terminology "means for" has been used in parts of the description, this can be replaced by the terminology "apparatus for", as will be recognised by the skilled person.

While the principles of the invention have been set out above in connection with specific embodiments, it is to be clearly understood that this description is merely made by way of example and not as a limitation of the scope of protection which is determined by the appended claims.

## Claims

1. A method for determining topology information of a network, said network comprising a set of transmission lines carrying associated transmission signals, comprising

- determining an estimate of crosstalk between every pair of lines of said set of transmission lines,
- deriving distance information for at least one pair of transmission lines based on said estimates of crosstalk.

2. A method according to claim 1, wherein the respective estimate of crosstalk is based on measurement of a set of parameter values for each line during transmission on said lines.

3. A method according to claim 2, wherein said set of parameter values comprises for each line at least the signal-to-noise ratio, the transmitted power and the direct transfer function of the line.

4. A method according to any of the previous claims, wherein subsets of said set of transmission lines are comprised in a set of different respective bundles, said bundles at least locally grouping said subset of transmission lines physically, comprising deriving which lines are located relatively close to each other based on said estimates of crosstalk , hereby determining the number of bundles present in said set of bundles and determining which subsets of lines belong to each of said bundles respectively.

5. A method according to claim 4, comprising rescaling said estimates of crosstalk by taking into account lengths and attenuation characteristics of said lines, and wherein transmission lines are identified as being relatively close to each other by taking into consideration whether said rescaled estimate of crosstalk is above a predetermined threshold.

6. A method according to claim 5, wherein said predetermined threshold is not smaller than a typical value for inter-bundle crosstalk.

7. A method according to any of the previous claims 4 to 5, wherein deriving which lines are located relatively close to each other comprises taking into account an estimate of probability that said respective lines are belonging to respective bundles.

8. A method according to any of the previous claims, further comprising associating at least one transmission signal to a transmission line different from said originally associated transmission line, based on said distance information.

9. A method according to any of the previous claims, comprising precompensating transmitted signals in downstream in a communication network over said lines at transmission side, taking into account said distance information between at least 2 lines and said estimated crosstalk information.

10. A method according to any of the previous claims, comprising cancelling effects of crosstalk on signals transmitted upstream in a communication network at reception side, taking into account said estimates of distance between at least 2 lines and said estimated crosstalk information.

11. A method according to any of the claims 1 to 3, wherein all transmission lines are present in a single bundle, comprising determining the relative physical positions of said lines within said bundle, based on the distance information derived for each pair of transmission lines.

12. A method according to claim 10 or 11, comprising precompensating signals transmitted downstream in a communication network over said lines, taking into account said relative physical positions of said lines.

13. A method according to any of claims 10 to 12, comprising cancelling effects of crosstalk on signals transmitted upstream in a communication network, taking into account relative physical positions of said lines.

14. A device for determining topology information for a network, said network comprising a set of transmission lines carrying associated transmission signals, comprising

- a crosstalk determining means for determining an estimate of crosstalk between every pair of lines of said set of transmission lines;
- a distance derivation means for deriving distance information for at least one pair of transmission lines based on said estimates of crosstalk.

15. A device according to claim 14, further comprising a rescaling means for rescaling said estimates of crosstalk by taking into account relative lengths and attenuation characteristics of said lines, and adapted for identifying transmission lines as being relatively close to each other by taking into consideration whether said rescaled estimate of crosstalk is above a predetermined threshold.

FIG. 1

Labels within figure: $H_{11}$, $H_{12}$, $H_{13}$, $H_{1n}$, User 1, User 2, User 3, User N

EP 2 365 661 A1

$$start$$

$$a_1 = 0$$

$$A_1^+ = (a_1^T a_1)^{-1} a_1^T$$

$$A_1^+ = 0$$

$$k = 2$$

$$d_k = A_{k-1}^+ a_k$$
$$c_k = a_k - A_{k-1} d_k$$

$$c_k = 0$$

$$b_k = (c_k^T c_k)^{-1} c_k^T$$

$$b_k = (1 + d_k^T d_k)^{-1} d_k^T A_{k-1}^+$$

$$A_k^+ = \left[ \frac{A_{k-1}^+ - d_k b_k}{b_k} \right]$$

$$k = n$$

$$k = k + 1$$

$$A^+ = A_n^+$$

**FIG. 2**

FIG. 3

EP 2 365 661 A1

FIG. 4

Loop i

Loop j

Distance = $1/C_{ij}$

FIG. 5

FIG. 6

Europäisches
Patentamt

European
Patent Office

Office européen
des brevets

**EUROPEAN SEARCH REPORT**

Application Number

EP 10 30 5232

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 630 968 A1 (CIT ALCATEL [FR]) 1 March 2006 (2006-03-01) | 1-4,14, 15 | INV. H04L12/24 H04B3/46 H04M3/34 |
| Y | * paragraphs [0002], [0004], [0006], [0008], [0010], [0014], [0015], [0018], [0022] - [0025] * | 5-13 | |
| X | JOCHEN MAES ET AL: "Maximizing Digital Subscriber Line Performance" BELL LABS TECHNICAL JOURNAL, 15 May 2008 (2008-05-15), pages 105-116, XP002591690 | 1,2,14 | |
| Y | * the whole document * | 3-13,15 | |
| Y | US 6 965 657 B1 (REZVANI BEHROOZ [US] ET AL) 15 November 2005 (2005-11-15) | 3-13,15 | |
| A | * column 1, line 53 - column 2, line 37 * * column 4, line 30 - column 8, line 11 * | 1,2,14 | |

TECHNICAL FIELDS
SEARCHED      (IPC)

H04L
H04B
H04M

The present search report has been drawn up for all claims

| Place of search | Date of completion of the search | Examiner |
|---|---|---|
| Munich | 13 July 2010 | Ceccarini, Giulio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 30 5232

This annex lists the patent family members relating to the patent documents cited in the above-mentioned European search report.
The members are as contained in the European Patent Office EDP file on
The European Patent Office is in no way liable for these particulars which are merely given for the purpose of information.

13-07-2010

| Patent document cited in search report | | Publication date | Patent family member(s) | | Publication date |
|---|---|---|---|---|---|
| EP 1630968 | A1 | 01-03-2006 | CN | 1741406 A | 01-03-2006 |
| | | | US | 2006039456 A1 | 23-02-2006 |
| US 6965657 | B1 | 15-11-2005 | NONE | | |

EPO FORM P0459

For more details about this annex : see Official Journal of the European Patent Office, No. 12/82